Europäisches Patentamt

European Patent Office

Office européen des brevets

(11) Publication number: **0 044 753**
**B1**

# EUROPEAN PATENT SPECIFICATION

(45) Date of publication of patent specification: **31.10.84**

(51) Int. Cl.³: **H 01 M 10/50, H 01 M 10/39**

(21) Application number: **81303390.9**

(22) Date of filing: **23.07.81**

(54) Electrochemical storage batteries and modules therefor.

(30) Priority: 23.07.80 GB 8024119
06.11.80 GB 8035725

(43) Date of publication of application:
27.01.82 Bulletin 82/04

(45) Publication of the grant of the patent:
31.10.84 Bulletin 84/44

(84) Designated Contracting States:
DE

(56) References cited:
GB-A-2 020 087
GB-A-2 027 978

(73) Proprietor: CHLORIDE SILENT POWER LIMITED
52 Grosvenor Gardens
London, SW1W 0AU (GB)

(72) Inventor: Bindin, Peter John
The Pear Trees Norton Village
Runcorn Cheshire (GB)
Inventor: Jones, Ivor Wynn
25 Upton Park
Chester Cheshire (GB)

(74) Representative: Rennie, Ian Malcolm et al
BOULT, WADE & TENNANT 27 Furnival Street
London EC4A 1PQ (GB)

Courier Press, Leamington Spa, England.

## Description

This invention relates to multicell sodium-sulphur storage batteries and to modules therefor.

Sodium-sulphur batteries, which are capable of high rates of charge and discharge, necessarily operate at a temperature above ambient since, in order to operate, the temperature of each cell must be above the melting point of the sodium forming the anode material and the sulphur/sodium polysulphides constituting the cathodic reactant.

A high temperature storage battery has to be provided with heating means so that it can initially be raised to the required temperature. However, when a battery is charging or discharging, due to the internal resistance, heat is developed inside each cell and hence, during normal operation the temperature of the battery would rise unless heat is removed. The normal practice is to allow the excess heat to be dissipated through the cell wall and, in the case of a multicell battery, through the battery housing.

Since batteries may be used intermittently they must not be cooled too quickly as they might fall below the minimum temperature for operation. It has therefore been proposed to provide insulation around individual cells or around a battery of cells to prevent or at least delay cooling of the cells. The provision of such thermal insulation however inhibits effective cooling if the cell should overheat for any reason.

These considerations lead to designing the housing wall as a compromise between the requirements for heat transmission and thermal insulation. In U.K. Specification No. 2020087, which is an example of such a compromise, insulation for a multicell storage battery is provided by a vacuum compartment within the housing wall and, to deal with the problem of possible overheating, hydrogen is admitted into the vacuum compartment to give thermal conduction. The hydrogen is normally absorbed on a material such as palladium. To release the hydrogen, the palladium has to be heated to a temperature above the operating temperature of the cell. To render the insulation system re-effective, the hydrogen storage system must be cooled down so that the gas is re-absorbed. Such an arrangement however still requires that heat must be transferred through the battery housing. This limits the number of cells which can be provided within the housing since it is undesirable to have any cell remote from the heat transfer means. Furthermore if a large battery is to be formed of a plurality of multicell modules with heat transfer through the housing for each module, then provision has to be made for heat transfer from the outer surfaces of the various individual modules, preventing close stacking of the modules.

It is known from GB—A—2 027 978 to form a sodium-sulphur battery with a casing containing a plurality of cells with ducts between blocks of cells for a cooling or heating medium.

According to the present invention a module for a sodium-sulphur battery comprising a container having a plurality of sodium sulphur cells and a flow passage for a heat transfer fluid through the container is characterised in that there are provided a flow control valve in the flow passage and temperature-responsive means arranged to control said valve in accordance with temperature and operative to close the flow control valve to prevent or reduce flow of fluid through said passage over a predetermined temperature range, the flow control valve being open at temperatures above and below said predetermined range. The flow control valve may comprise an apertured element and a closure element which are relatively movable under the control of said temperature-responsive means, whereby at least one aperture in said apertured element is at least partially closed by the closure element within said predetermined temperature range. Said at least one flow passage may be a tube or tubes of thermally conductive material forming a passageway through the container for a heating and/or cooling fluid.

The invention includes within its scope a multicell high temperature sodium-sulphur storage battery comprising a module as described above wherein the container encloses an evacuated region with radiation-inhibiting means located in said container in the evacuated region between the cells and said wall. If the cells are elongate cylindrical cells, they may be arranged parallel to one another and to the tube or tubes and in contact with the tube or tubes. In this case means may be provided for passing or circulating the fluid through the tube or tubes. In some cases, separate heating and cooling means may be provided in said tube, e.g. heating may be effected by an electrically energisable heating element and cooling effected by a fluid, for example a forced draught of air, in an annular region between the heating element and the inner wall of said tube.

Preferably each of the cells is in thermal contact with the aforementioned tube or at least one such tube. The cells preferably have a thermally conductive outer wall, e.g. a metal wall, to facilitate heat transfer between the cells and the thermally conductive fluid. As described later, it may be necessary to provide electrical insulation between the cells and said tube but this may be thin and give little impedance to heat transfer. The radiation inhibiting means may comprise metal foil, preferably a multi-layer foil assembly with adjacent layers insulated from one another to reduce thermal conduction. For example a sandwich of metal foil and a ceramic paper may be used or a multiple layer of foil with an insulating coating on one surface or both surfaces of the foil. The foil most conveniently is aluminium but it is possible to use for example copper foil or iron foil or stainless steel. The ceramic paper may be a paper formed with fibres of a refractory oxide material, e.g. alumina.

With this construction, the vacuum within the housing together with the radiation-inhibiting means provided serves to minimise heat loss from the cells through the battery housing. Temperature control is now effected by control means controlling the flow of a gas or liquid, constituting the aforesaid fluid, which is passed through the tube or tubes. The control means may be operatively responsive to the battery temperature. In one arrangement, a thermally responsive bi-metallic element is used to operate or to constitute a valve closing said tube when the temperature falls below the required operating temperature. Such valves enable individual multi-cell modules of a large battery to be separately controlled automatically. A valve of this nature is particularly convenient when the fluid is circulated through the tube for cooling purposes, heating of the cells for initial starting from cold being effected by other means, e.g. electric heating elements.

The battery conveniently comprises a plurality of elongate cells arranged parallel to one another, conveniently tubular cells, and the aforementioned tube for the heating or cooling fluid extends lengthwise through the housing. The housing thus may be made cylindrical or square in external transverse cross-section and, since there is no heat transfer through the walls of the housing, such batteries can be put side by side to form modules of a battery assembly. This permits of compact packing of the modules.

The cells inside the housing may be electrically interconnected within the housing, for example in series or in parallel or in a series-parallel combination. Conveniently the electrical connections are taken out through one end of the housing. If the cells are connected in series or series-parallel, and if, as is the common practice with sodium-sulphur cells, the housing of the cell constitutes one pole, or terminal of the cell, then individual cells must be electrically insulated from one another. This may readily be achieved by a thin layer of insulating material, e.g. enamel, on the cells or on the aforesaid tube of thermally conductive material. In the latter case, the tube may be provided with fins extending outwardly between the cells to prevent direct contact between adjacent cells. A thin layer of electrical insulating material provides little impedance to heat transfer and the metal fins will improve heat transfer from the cells to the tube.

The housing may comprise a cylindrical or square section container conveniently having straight-sided side walls and closed by end plates, which have been welded to the side walls of the container. The aforementioned tube, to allow for differential thermal expansion and to reduce heat losses, may be sealed to the end walls through a bellows unit or two bellows units inside the container. Conveniently two separate bellows units are provided each bonded at one end into an end plate of the container and at the other end welded to the tube.

With the above-described construction the heat transfer fluid, which would typically be air, is passed through the modules when they are above or below the predetermined temperature range which is a range within which the cells are operative. In normal operation, when heat has to be removed from the cells, the fluid, e.g. atmospheric air, may be passed through the modules to remove the heat. If cells have to be heated, e.g. if the battery has to be started from cold, the air or other heat transfer fluid is heated before it is passed through the modules. In some cases heating means may be provided in the battery but often it may be convenient to provide a portable auxiliary air heater for feeding hot air into a battery which is to be brought up to operating temperature.

As mentioned above, the flow control valve may comprise an apertured element and a closure element, e.g. a plate, which are relatively movable under the control of said temperature-responsive means. These temperature-responsive means may be a bimetallic strip. By choice of the shaping of the closure element and the aperture or apertures in said apertured element, it can readily be arranged that the aperture or apertures is or are fully closed over a predetermined temperature range. Outside that range, the or each aperture is at least partially open. The rate of aperture opening is determined by the shaping of the aperture and closure member.

The fluid driving means may comprise an air blower feeding air into a header or headers for passage through the various modules. The header or headers may be arranged at one end of the modules and the individual modules may be removably mounted in the battery so that they can be drawn out at the other end for replacement if necessary. The heating means may comprise an electrically energised air heater for heating the air passing through or in said header or headers. In this case, a temperature-responsive switch, responsive to the temperature of the battery may be provided for controlling the heater. It will be appreciated that, provided each cell in the battery is raised to a temperature at which it will start operating, when current is drawn from the cell, that cell will generate further heat internally and hence all the cells will become heated to the required operating temperature. For this reason, the temperature control for the heater is not critical. The simple form of flow control valve serves to interrupt or at least reduce flow of the fluid through the module when the cells are at their normal operating temperature but, as is well known, this temperature can vary between relatively wide limits. The simple arrangement described above however enables cells to be heated without providing each cell or module with an individual electric heating element. It also ensures that a coolant is passed through the modules if they become too hot.

In the following description, reference will be made to the accompanying drawings in which:—

Figure 1 is a transverse cross-section through one construction of a battery module containing four sodium-sulphur cells;

Figure 2 is a longitudinal section through the battery module of Figure 1;

Figure 3 is a transverse section similar to Figure 1 of another construction of battery module;

Figure 4 is a longitudinal section through the battery module of Figure 3;

Figure 5 is a perspective view of a battery containing a plurality of modules each with four sodium sulphur cells;

Figure 6 is a sectional side elevation of part of one module in the battery of Figure 1; and

Figures 7 and 8 are front elevations of two components of a flow control valve.

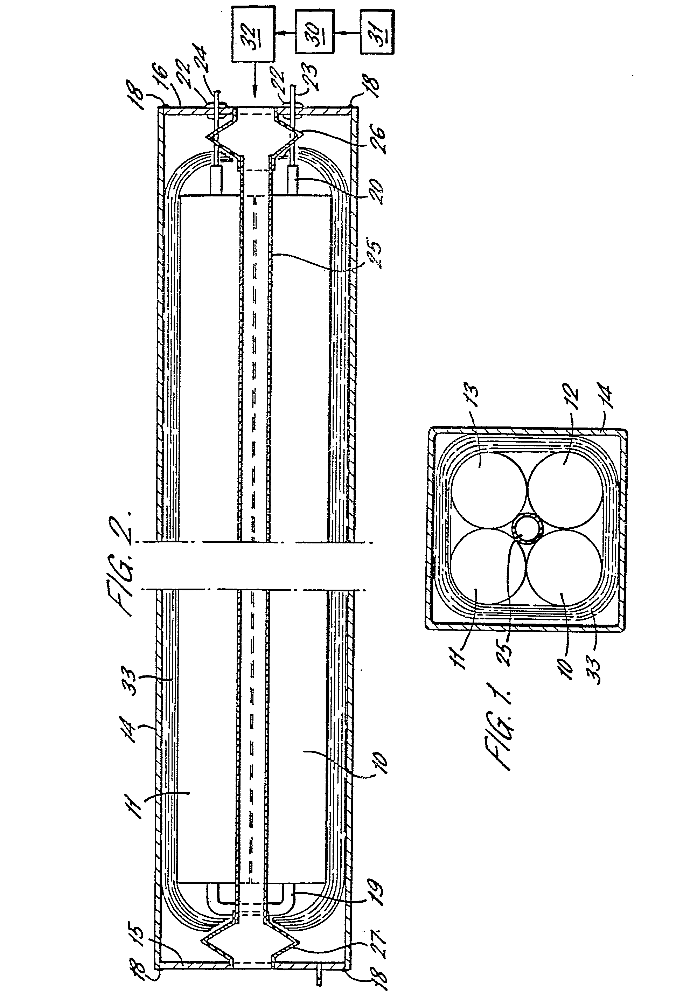

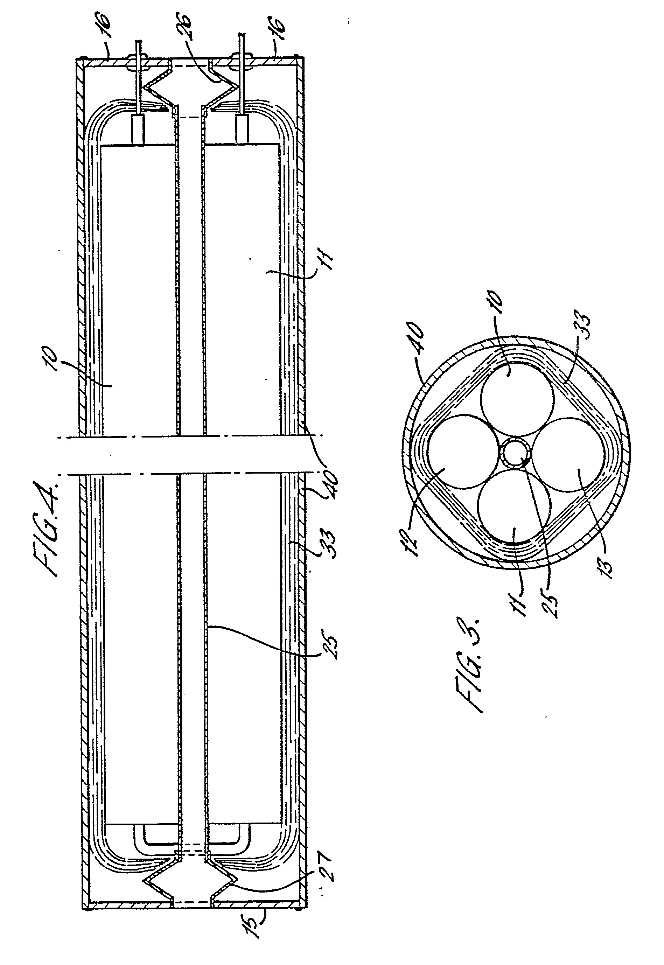

Referring to Figures 1 and 2, the battery module comprises four elongate cylindrical sodium-sulphur cells 10, 11, 12, 13 arranged in an outer aluminium container which is of square section with rounded corners as shown in Figure 1. The container is formed of an element 14 defining the straight parallel sides, the container being closed by two end caps 15, 16 which are welded to the tubular side wall element 14 by welds 18.

The individual cells are extremely symmetrical and may be connected in series or parallel or in combined series and parallel arrangement. In the particular embodiment illustrated, the four cells are connected in series. Each cell has an anode terminal at one end and cathode terminal at the other. The four cells are arranged so that, at each end of the module, two cells have anode terminals and the other two cells have cathode terminals. In Figure 2, there are shown two cells 10, 11 having poles of opposite polarity connected together by a link 19 at one end of the battery. The other two cells are similarly connected at this end of the battery. At the other end of the battery, two output terminals 20, 21 with connections 23, 24 are taken through glass bushings 22 in the aluminium end cap 16.

Extending centrally through the assembly of cells and in direct thermal contact with the four individual cells is a stainless steel cooling tube 25 which, at its ends, is sealed to stainless steel bellows units 26, 27, these bellows units being bonded into the aluminium end caps 15, 16 respectively, to provide a through passage for the circulation of a coolant fluid, e.g. gas or liquid. The fluid is circulated by circulating means indicated diagrammatically at 30. The coolant may be air or it may be some other fluid which would be recirculated. The fluid flow may be controlled automatically by control means 31 which may be operatively responsive to the temperature of the battery. As indicated at 32 provision is made for heating this fluid to provide the required heating for the battery, if the battery is to be started from cold. The bellows units 26, 27 allow for differential thermal expansion between the stainless steel tube 25 and the battery assembly.

The individual cells 10, 11, 12 and 13 each comprise a metal cylinder containing the anodic and cathodic reactants, that is to say the sodium and the sulphur/sodium polysulphides for a sodium sulphur cell, these reactants being separated by a solid electrolyte. Because the cells in this embodiment are electrically in series, they must be electrically insulated from one another. This may readily be achieved by a thin insulating layer around each cell, e.g. an enamel layer, without significantly reducing thermal conduction. Alternatively insulating separators may be provided between the cells and the tube 25. The separators may be fins on the tube. Metal fins with an insulating coating will assist heat transfer.

The cells are put in direct thermal contact with the cooling tube 25 to facilitate heat transfer. The assembly of cells is wrapped with a sandwich 33 of aluminium foil and ceramic paper which lies between the cells and the inside walls of the housing. The ceramic paper in this embodiment is formed from alumina fibres and was about 0.3 mm thick. This forms an insulating medium with the foil preventing transfer by radiation. The sandwich is formed as a multi-turn spiral of foil and paper. This wrapping also serves to position the cells in the housing, holding them in tight contact with the tube 25. The inside of the housing is evacuated to a pressure which typically is 13 $Nm^{-2}$. The combination of the insulation and the vacuum reduces the heat loss from the cells via the housing walls so that this is negligible. Hence the modules can be packed close together in an assembly forming a large battery. Temperature control is effected by the fluid passed through the central tube and provision may be made for automatic control, e.g. by control means 31 responsive to the temperature of the battery and controlling the fluid flow and/or heating or cooling means for the fluid. The control means may comprise a separate thermally responsive valve, e.g. a bi-metallic element on each tube 25. For a sodium-sulphur cell may be arranged so that it is open if the temperature is above 350°C and closed if the temperature is below 310°C. Such valves avoid any external mechanical or electrical control system and permit the flow through each tube 25 of a large battery to be controlled individually.

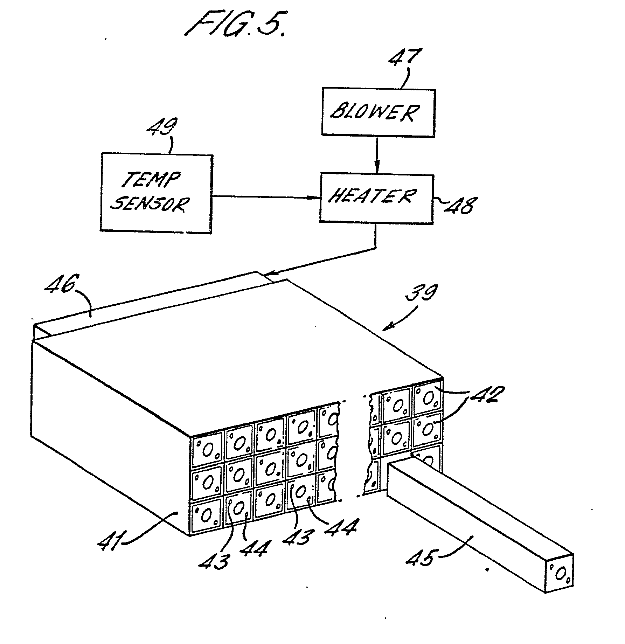

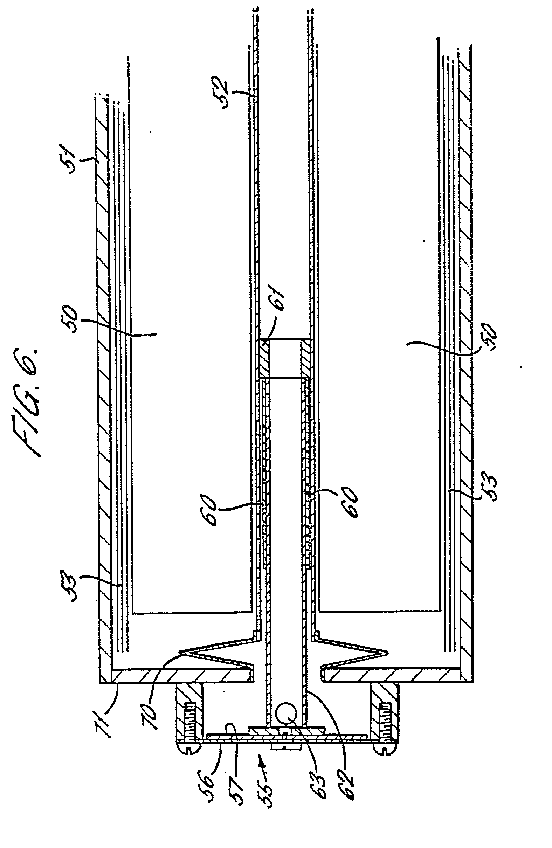

The square section construction shown in Figures 1 and 2 is convenient for forming a large battery assembly from a number of modules. In some cases however it may be preferred to use a cylindrical construction where it may be more convenient to manufacture and is more economical. Such an arrangement is shown in Figures 3 and 4. In these figures the same reference numerals are used to indicate corresponding elements. It will be seen however that in this construction, the outer housing 40 is of cylindrical section instead of being of square section as shown in Figures 1 and 2.

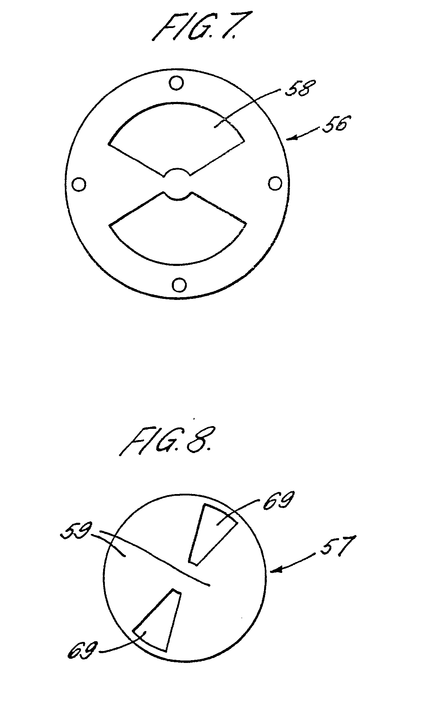

Referring to Figure 5 there is shown diagrammatically a battery 39 comprising a supporting frame 41 adapted to hold a plurality of modules 42 arranged in rows and columns. In this particular embodiment, the modules are elongate modules extending horizontally. Each module has two electrical terminals 43, 44 at its front end for electrical interconnection of the modules. For simplicity these electrical connections have been omitted. In ths known way the modules may be connected in series and/or parallel. The modules may be withdrawn from the front end of the assembly as shown with one module 45, so enabling the modules to be removed and replaced. At the rear end of the modules, they are mechanically arranged so that air from a header 46, extending across the rear surface of the battery, can pass into a passageway through each respective module. Air is passed into the header by means of a blower shown diagrammatically at 47. In this particular battery, electrical heater means 48 are provided for heating air passing from the blower into the header, these heating means being controlled by temperature-responsive means shown diagrammatically at 49 which are responsive to the temperature of the battery. These temperature-responsive means may comprise a temperature sensor or preferably a plurality of sensors embedded in the battery structure. If there are a plurality of sensors, averaging means may be provided for controlling the heating means. These temperature responsive means may be arranged to switch off the heater if the temperature sensed at the measuring point or points exceeds a preselected temperature which typically is about 300°C.

In many circumstances, it is more convenient however to make use of a portable air heater which can be connected to the header when it is required to heat a battery from cold. Such an arrangement may be used for example with a battery for a vehicle. Heating of the battery is effected using a portable heater, before the vehicle starts a journey. During normal operation of the vehicle, the battery will remain at a suitable operating temperature even when no current is being drawn from the battery.

Referring to Figure 6, each module comprises four cells 50 arranged in an outer metal casing 51 of square section. Extending centrally through the module is a pipe 52 for the heat transfer fluid which in this case is air. This pipe is in thermal contact with all four cells and is sealed by bellows units 70 to end plates 71 of the module. Around the outside of the cells, between the cells 50 and the outer container 51, insulation is provided shown diagrammatically at 53. The pipe, at one end, has a flow control valve 55 which comprises two relatively rotatable components 56, 57 shown in front elevation in Figures 7 and 8 respectively. The component 56 of this valve is a fixed plate having, in the embodiment shown, two apertures 58. The fixed plate 56 is bolted to one end plate 71 of the module. The second component 57 is a shutter rotatably mounted on the plate 56; this shutter has two closure portions 59 which move simultaneously across the apertures 58 as the shutter is rotated. The shutter is driven by a helical bimetallic element 60, one end of which is welded to a fixed tube 61 lying within the pipe 52 in the module and the other end of which is welded to a coaxial but rotatable tube 62 extending through the end of the pipe 52 and through the end plate 71 to the shutter 57, which is welded to the tube 62. The bimetallic element 60 is arranged so that the shutter 57 closes the apertures 58 over a predetermined temperature range, e.g. 300°C to 370°C. In this temperature range, the cells will operate normally and require neither heating nor cooling. If the cells become too hot, the bimetallic strip drives the shutter further round so that cut-outs 69 in the plate overlap the apertures 58 in plate 56 thereby gradually opening the apertures. Air from the aforementioned blower passes via the header and through the valve apertures 58 into the module hence serving to cool the cells therein. The pipe 62 has apertures 63 so that the air passing through apertures 58 can enter the tube 62 and hence can flow along this tube and so through tube 61 and pipe 52. If the cells are cold, the shutters move to an opposite extreme position, leaving the air passage open for the passage of hot air through the module.

It will be seen that the above-described construction permits of individual modules being readily moved. There are no separate control connections for the temperature control or heating the individual modules yet each module is cooled only if its temperature rises above the predetermined range set by the operation of the valve.

**Claims**

1. A module for a sodium-sulphur battery comprising a container (14 or 51) having a plurality of sodium-sulphur cells (10—13 or 50) and a flow passage (25 or 52) for a heat transfer fluid through the container characterised in that there are provided a flow control valve (31 or 55) in the flow passage (25 or 52) and temperature-responsive means (60) arranged to control said valve in accordance with temperature and operative to close the flow control valve (31 or 55) to prevent or reduce the flow of fluid through said passage over a predetermined temperature range, the flow control valve (31 or 55) being open at temperatures above and below said predetermined range.

2. A module as claimed in claim 1 characterised in that said flow control valve (31 or 55) comprises an apertured element (56) and a closure element (57) which are relatively movable under the control of said temperature-responsive means (60), whereby at least one aperture (58) in said apertured element (56) is at least partially closed by the closure element (57) within said predetermined temperature range.

3. A module as claimed in claim 2 characterised in that said apertured element (56) and closure element (57) are relatively rotatable.

4. A module as claimed in any of the preceding claims characterised in that said temperature-responsive means (60) is a bimetallic strip.

5. A module as claimed in either claim 2 or claim 3 characterised in that the closure element (57) and the aperture or apertures in said apertured element (56) are arranged so that the valve is fully closed over a predetermined temperature range.

6. A module as claimed in either claim 3 or claim 5 characterised in that the temperature responsive means (60) is a bimetallic strip of helical form and is arranged to effect rotational movement between the closure element (57) and the apertured element (56).

7. A multicell high temperature sodium-sulphur storage battery comprising a module as claimed in any of the preceding claims characterised in that in said container (14 or 51) has a wall (14 or 51) enclosing an evacuated region with radiation-inhibiting means (33 or 53) located in said container in said evacuated region between the cells and said wall.

8. A battery as claimed in claim 7 characterised in that each of the cells (10—13 or 50) is in thermal contact with a tube (25 or 52) of thermally conductive material constituting said flow passage (25 or 52).

9. A battery as claimed in either claim 7 or claim 8 characterised in that the cells (10—13 or 50) are elongate cells arranged around a tube (25 or 52) constituting said flow passage and parallel thereto and in that the radiation-inhibiting means comprises insulated metal foil (33 or 53) wrapped around the cells (10—13 or 50) and said tube (25 or 52) to hold the cells against said tube.

10. A battery as claimed in either claim 7 or claim 8 and having an electrically energisable heating element in said at least one tube.

11. A battery as claimed in any of claims 7 to 10 and having means for circulating air through said at least one tube as a cooling medium.

12. A battery as claimed in any of claims 7 to 11 characterised in that said cells (10—13 or 50) are elongate cells arranged parallel to one another and said flow passage (25 or 52) is a tube for heating or cooling fluid extending lengthwise through the container (14 or 51) and in that the container has side walls (14 or 51) closed by end plates (15, 16 or 71) and in that said tube (25 or 52), to allow for differential thermal expansion, is sealed to the end walls through a bellows unit (26, 27 or 70) or two bellows units (26, 27 or 70) inside the container (14 or 51).

## Patentansprüche

1. Modul für eine Natrium- Schwefel-Batterie, bestehend aus einem Behälter (14 oder 51) mit zahlreichen Natrium-Schwefel-Zellen (10—13 oder 50) und einem Strömungskanal (25 oder 52) durch den Behälter für ein Wärmeübertragungsfluid, gekennzeichnet durch ein Stromventil (31 oder 55) in dem Strömungskanal (25 oder 52) und eine auf die Temperatur ansprechenden Einrichtung (60), die zur Steuerung des Ventils gemäß der Temperatur vorgesehen ist und das Stromventil (31 oder 55) schließt, um die Strömung von Fluid durch den Kanal über einen vorbestimmten Temperaturbereich zu verhindern oder zu verringern, wobei das Stromventil (31 oder 55) bei Temperaturen oberhalb und unterhalb des vorbestimmten Bereichs offen ist.

2. Modul nach Anspruch 1, dadurch gekennzeichnet, daß das Stromventil (31 oder 55) ein mit Öffnungen versehenes Element (56) und eine Verschlußelement (57) aufweist, welche auf Grund der Steuerung der auf die Temperatur ansprechenden Einrichtung (60) relativ bewegbar sind, wodurch wenigstens eine Öffnung (58) in dem mit Öffnungen versehenen Element (56) innerhalb des vorbestimmten Temperaturbereichs wenigstens teilweise von dem Verschlußelement (57) geschlossen wird.

3. Modul nach Anspruch 2, dadurch gekennzeichnet, daß das mit Öffnungen versehene Element (56) und das Verschlußelement (57) relativ drehbar sind.

4. Modul nach einem der vorangehenden Ansprüche, dadurch gekennzeichnet, daß die auf die Temperatur ansprechende Einrichtung (60) ein Bimetallstreifen ist.

5 Modul nach Anspruch 2 oder 3, dadurch gekennzeichnet, daß das Vershlußelement (57) und die Öffnung bzw. die Öffnungen in dem mit Öffnungen versehenen Element (56) derart angeordnet sind, daß das Ventil über einen vorbestimmten Temperaturbereich vollständig geschlossen ist.

6. Modul nach Anspruch 3 oder 5, dadurch gekennzeichnet, daß die auf die Temperatur ansprechende Einrichtung (60) ein schraubenförmiger Bimetallstreifen ist und zur Vornahme einer Drehbewegung zwischen dem Verschlußelement (57) und dem mit Öffnungen versehenen Element (56) vorgesehen ist.

7. Mehrzellen-Hochtemperatur-Natrium-Schwefel-Speicherbatterie, mit einem Modul gemäß einem der vorangehenden Ansprüche, dadurch gekennzeichnet, daß der Behälter (14 oder 51) eine einen Unterdruckbereich umschließenden Wandung (14 oder 51) mit einer Strahlungsabschirmungseinrichtung (33 oder 53) besitzt, die in dem Behälter in dem Unterdruckbereich zwischen den Zellen und der Wandung angeordnet ist.

8. Batterie nach Anspruch 7, dadurch gekennzeichnet, daß jede Zelle (10—13 oder 50) in thermischen Kontakt mit einem Rohr (25 oder 52) aus thermisch leitendem Material ist, das den Strömungskanal (25 oder 52) bildet.

9. Batterie nach Anspruch 7 oder 8, dadurch gekennzeichnet, daß die Zellen (10—13 oder 50) langgestreckte Zellen sind, die um ein Rohr (25 oder 52), das den Strömungskanal bildet, und parallel zu diesem angeordnet sind, und daß die Strahlungsabschirmungseinrichtung eine isolierte Metallfolie (33 oder 53) aufweist, die um die Zellen (10—13 oder 50) und das Rohr (25 oder 52) gewickelt ist, um die Zellen gegen das Rohr zu halten.

10. Batterie nach Anspruch 7 oder 8, gekennzeichnet durch ein elektrisch erregbares Heizelement in wenigstens einem Rohr.

11. Batterie nach einem der Ansprüche 7 bis 10, gekennzeichnet durch eine Einrichtung zum Umwälzen von Luft als Kühlmedium durch wenigstens ein Rohr.

12. Batterie nach einem der Ansprüche 7 bis 11, dadurch gekennzeichnet, daß die Zellen (10—13 oder 50) langgestreckte Zellen sind, die parallel zueinander angeordnet sind, und daß der Strömungskanal (25 oder 52) ein Rohr zum Erhitzen oder Kühlen von sich in Längsrichtung durch den Behälter (14 oder 51) erstreckenden Fluid ist, und daß der Behälter Seitenwandungen (14 oder 51) besitzt, die von Endplatten (15, 16 oder 17) geschlossen sind und daß das Rohr (25 oder 52) an den Endwandungen über eine oder zwei Balgeneinheiten (26, 27 oder 70) innerhalb des Behälters (14 oder 51) zue Ermöglichung einer unterschiedlichen thermischen Ausdehnung abgedichtet ist.

**Revendications**

1. Module pour batterie sodium-soufre comprenant un récipient (14 ou 51) comportant une pluralité d'éléments sodium-soufre (10—13 ou 50) et un passage (25 ou 52) pour l'écoulement d'un fluide de transmission de chaleur à travers le récipient caractérisé en ce qu'il est prévu une vanne de commande d'écoulement (31 ou 55) située dans le passage d'écoulement (25 ou 52) et un moyen sensible à la température (60) agencé pour commander ladite vanne fonction de la température et agissant pour fermer la vanne de commande d'écoulement (31 ou 55) afin d'empêcher ou de réduire l'écoulement de fluide à travers ledit passage dans un intervale de températur déterminé, la vanne de commande d'écoulement (31 ou 55) étant ouverte à des températures supérieures et inférieures audit intervalle déterminé.

2. Module selon la revendication 1, caractérisé en ce que ladite vanne de commande d'écoulement (31 ou 55) comprend un élément perforé (56) et un élément de fermeture (57) mobiles l'un par rapport à l'autre sous la commande dudit moyen sensible à la température (60), en sorte qu'au moins un orifice (58) dudit élément perforé (56) est fermé au moins partiellement par l'élément de fermeture (57) au sein dudit intervalle de température.

3. Module selon la revendication 2 caractérisé en ce que lesdits élément perforé (56) et élément de fermeture (57) peuvent tourner l'un par rapport à l'autre.

4. Module selon l'une quelconque des revendications précédentes caractérisé en ce que ledit moyen sensible à la température (60) est un bilame.

5. Module selon la revendication 2 ou 3 caractérisé en ce que l'élément de fermeture (57) et l'orifice ou les orifices dudit élément perforé (56) sont agencés en sorte que la vanne soit complètement fermée dans un intervalle de température déterminé.

6. Module selon la revendication 3 ou 5 caractérisé en ce que le moyen sensible à la température est un bilame de forme hélicoïdale et est agencé pour provoquer un mouvement de rotation entre l'élément de fermeture (57) et l'élément perforé (56).

7. Batterie d'accumulateurs sodium-soufre à haute température à plusieurs éléments comprenant un module selon l'une quelconque des revendications précédentes, caractérisée en ce que ledit récipient (14 ou 51) comporte une paroi (14 ou 51) enfermant une région évacuée, un moyen inhibiteur de radiations (33 ou 53) étant disposé dans ledit récipient dans ladite région évacuée entre les éléments et ladite paroi.

8. Batterie selon la revendication 7, caractérisé en ce que chacun des éléments (10—13 ou 50) est en contact thermique avec un tube (25 ou 52) en matériau conducteur de la chaleur constituant ledit passage d'écoulement (25 ou 52).

9. Batterie selon l'une ou l'autre des revendications 7 et 8 caractérisé en ce que les éléments (10—13 ou 50) sont des éléments oblongs disposés autour d'un tube (25 ou 52) constituant ledit passage d'écoulement et parallèlement à celui-ci et en ce que le moyen inhibiteur de radiations est constitué par de la feuille métallique isolée (33 ou 53) enroulée autour des éléments (10—13 ou 50) et dudit tube (25 ou 52) pour maintenir les éléments contre ledit tube.

10. Batterie selon la revendication 7 ou 8 et comportant un élément chauffant excitable électriquement dans ledit tube.

11. Batterie selon l'une quelconque des revendications 7 à 10 et comportant des moyens pour faire circuler de l'air à travers ledit tube en tant qu'agent de refroidissement.

12. Batterie selon l'une quelconque des revendications 7 à 11 caractérisée en ce que lesdits éléments (10—13 ou 50) sont des éléments allongés disposés parallèlement les uns aux autres et ledit passage d'écoulement (25 ou 52) est un tube pour le chauffage ou refroidissement de fluide s'étendant longitudinalement à travers le récipient (14 ou 51) et en ce que le récipient comporte des parois latérales (14 ou 51) fermées par des plaques d'extrémités (15, 16 ou 71) et en ce que ledit tube (25 ou 52), en vue de permettre une dilatation thermique différentielle, est raccordé de manière étanche aux parois terminales par un soufflet (26, 27 ou 70) ou deux soufflets (26, 27 ou 70) à l'intérieur du récipient (14 ou 51).

FIG. 2.

FIG. 1.

0 044 753

FIG.4.

FIG.3.

2

*FIG.5.*

*FIG. 6.*

0 044 753

## FIG. 7.

58

56

## FIG. 8.

69

59

57

69